# FASCICULE DE BREVET EUROPEEN

(11) **EP 2 311 200 B1**
(45) Date de publication et mention de la délivrance du brevet: **03.06.2020**
(21) Numéro de dépôt: 09784438.5
(22) Date de dépôt: 26.06.2009
(51) Int. Cl.: H04B 7/0417, H04B 7/024

(54) **COMMUNICATIONS COOPERATIVES MULTICELLULAIRES DANS UN RESEAU DECENTRALISÉ**
KOOPERATIVE MEHRZELLENKOMMUNIKATION IN EINEM DEZENTRALISIERTEN NETZ
MULTICELL COOPERATIVE COMMUNICATIONS IN A DECENTRALIZED NETWORK

(30) Priorité: 30.06.2008 FR 0854420
(43) Date de publication de la demande: 20.04.2011
(73) Titulaire: 3G Licensing S.A., 2132 Luxembourg (LU)
(72) Inventeur: PAPADOGIANNIS, Agisilaos, SE-413 20 GOTHENBURG (SE); HARDOUIN, Eric, F-75015 Paris (FR); GESBERT, David, F-06330 ROQUEFORT LES PINS (FR)
(74) Mandataire: Metroconsult Srl
(86) Numéro de dépôt international: PCT/FR2009/051227
(87) Numéro de publication internationale: WO 2010/004179

(56) Documents cités:
- WO-A-2007/128135
- WO-A1-2007/128135
- WO-A2-2007/108655
- US-A1- 2008 076 370
- US-A1- 2008 076 370
- ALCATEL SHANGHAI BELL ET AL: "Collaborative MIMO for LTE-A downlink" 3GPP DRAFT; R1-082501_DL COLLABORATIVE MIMO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. tsg_ran\WG1_RL1\TSGR1_53b\Docs, no. Warsaw, Poland; 20080630, 24 juin 2008 (2008-06-24), XP050110769
- ALCATEL SHANGHAI BELL ET AL: "Collaborative MIMO for LTE-A downlink", 3GPP DRAFT; R1-082501_DL COLLABORATIVE MIMO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Warsaw, Poland; 20080624, 24 June 2008 (2008-06-24), XP050110769, [retrieved on 2008-06-24]

## Description

L'invention se situe dans le domaine des radiocommunications sans-fil et mobiles, qui comprend entre autres les réseaux dits WIMAX, WIFI, 4G, les réseaux de type IEEE802.11, IEEE802.16 et en particulier IEEE802.16m.

Dans le cadre de communications dites « coopératives multicellulaires », les terminaux reçoivent du signal utile de plusieurs stations de base coopérant entre elles.

Cette technique est très prometteuse mais peut faire encore l'objet d'améliorations, notamment pour simplifier sa mise en œuvre.

Les communications coopératives multicellulaires permettent aux terminaux de recevoir du signal utile de plusieurs stations de base, de manière coordonnée entre les stations de base, et ce avantageusement afin de minimiser l'interférence entre cellules. En effet, l'interférence intercellulaire est la raison principale qui limite l'efficacité spectrale des systèmes cellulaires. On prévoit alors de faire coopérer ensemble quelques stations de base qui échangent efficacement entre elles des informations. Les stations de base qui coopèrent forment ce qui est appelé un « groupe » de coopération (ou « *cluster* » en anglais).

Outre la réduction d'interférence entre les cellules, la transmission par plusieurs stations de base offre aussi des avantages en termes de robustesse contre :
- le masquage (ou « shadowing » en anglais), et
- les pertes de signal du type « évanouissements rapides » (« fast fading » en anglais),
car les canaux de transmission entre un terminal et différentes stations de base peuvent être décorrélés. On parle alors de « macro-diversité ».

La coopération multicellulaire est une technique entre plusieurs utilisateurs (ou « multiutilisateurs ») de type MIMO (pour « Multiple-Input Multiple-Output » en anglais) qui permet aux stations de base du cluster de coopération d'agir comme un seul réseau d'antennes distribuées. L'une des utilisations les plus prometteuses de ce réseau distribué pour accroitre le débit total de la cellule est de réaliser un accès multiple par répartition dans l'espace (ou SDMA pour Space Division Multiple Access en anglais), c'est-à-dire de servir plusieurs utilisateurs simultanément en utilisant un même bloc de ressources. On rappelle qu'un bloc de ressources représente la quantité élémentaire de ressources radio qui peuvent être allouées à un utilisateur.
Par exemple, en technologie CDMA (pour « Code Division Multiple Access ») un bloc de ressources peut être défini par :
- une fréquence porteuse
- un code d'étalement, et
- une durée.
En technologie OFDMA (pour « Orthogonal Frequency-Division Multiple Access »), un bloc de ressources peut être un « *chunk* », c'est-à-dire un ensemble de sous porteuses pendant la durée d'un ensemble de symboles en modulation OFDM (pour « Orthogonal Frequency Division Modulation »).

La macro-diversité est déjà utilisée depuis quelques années dans la technique UMTS (pour « Universal Mobile Télécommunications System ») pour améliorer la performance des utilisateurs en bordure de cellule. Cependant, la technique UMTS n'utilise pas de SDMA : les stations de base qui coopèrent ne transmettent qu'à un seul utilisateur en même temps sur une fréquence et un code donné.

Deux techniques pour mettre en œuvre du SDMA, sur voie descendante (de la station au terminal ou « downlink », s'opposant à « uplink » pour la voie montante du terminal vers la station de base), sont le pré-codage linéaire (utilisation de faisceaux adaptatifs) et la technique dite de « Dirty Paper Coding » (encore appelée « technique d'insertion avec information de bord » en français).

Le pré-codage linéaire peut aussi être effectué à partir de faisceaux fixes (méthode dite du « Grid-of-Beams »). Une technique de transmission qui peut être avantageuse dans la pratique est le pré-codage linéaire car elle représente un bon compromis entre performance et complexité. A chaque intervalle de temps de transmission (noté temps TTI ci-après), les stations de base du cluster de coopération peuvent servir au maximum autant de terminaux par bloc de ressources que le nombre total d'antennes du cluster. On rappelle que le temps TTI est l'intervalle de temps élémentaire pendant lequel des ressources radio peuvent être attribuées à un utilisateur. La mise en œuvre du SDMA sur la voie descendante peut être effectuée si les stations de base ont l'information sur l'état du canal (ou information CSI pour « Channel State Information » en anglais) qui est une information sur les canaux de transmission sur le downlink entre les antennes des stations de base et les antennes de chaque utilisateur. L'information CSI peut par exemple être constituée des coefficients des canaux de transmission.

Toutefois, le pré-codage linéaire peut également être employé dans le cadre des communications coopératives multicellulaires sans SDMA, un seul terminal étant alors servi par temps TTI. Dans ce cas l'utilisateur servi bénéficie de plus de puissance et donc d'une meilleure qualité de signal reçu, mais la capacité globale du système est généralement réduite comparé au cas où le SDMA est utilisé. Néanmoins, servir un seul terminal à la fois peut être privilégié si l'on souhaite fournir une bonne qualité de service à certains utilisateurs en conditions de réception particulièrement défavorables.

Dans le cas de faisceaux fixes, on considère que l'information CSI peut également être une information sur le faisceau le plus approprié pour le terminal, c'est-à-dire celui reçu avec le maximum de puissance.

De plus, les systèmes de communication par paquets nécessitent généralement de disposer d'une information sur la qualité du canal afin de déterminer la combinaison appropriée de modulation et codage à utiliser pour la transmission. Cette information est traditionnellement appelée information CQI, pour Channel Quality Indicator en anglais, et peut être par exemple un rapport signal sur interférence et bruit. En outre, cette information CQI peut également être utilisée pour déterminer l'ordonnancement des terminaux à servir (ou "scheduling" en anglais).

Dans ce document, on utilise le terme général d'information sur le canal (ou information CI), qui désigne l'ensemble constitué de l'information CSI et de l'information CQI. Dans la suite, on appelle « information CI locale » à une station de base une information CI sur les canaux de transmission entre un terminal et les antennes de cette station de base. Une information CI non-locale à une station de base est l'information CI sur les canaux de transmission entre un terminal et une station de base différente.

Habituellement, dans le cadre des communications coopératives multicellulaires sur le downlink des systèmes à Duplexage par Division de Fréquence (ou duplexage FDD), le terminal doit estimer les informations CI des canaux de transmission entre ses antennes et les antennes des stations de base du cluster de coopération auquel il est associé. Les informations CI doivent ensuite être transmises à une entité centrale appelée « contrôleur central » (CC).

La transmission des informations CI du terminal au contrôleur central peut s'effectuer selon la méthode suivante : le terminal transmet par voie de retour à chaque station de base du cluster les informations CI locales à cette station de base. On note que dans cette méthode, une voie de retour est nécessaire par station de base. Chaque station de base transfère dans un deuxième temps au contrôleur central les informations CI reçues.

Le contrôleur central rassemble les informations CI de tous les terminaux du cluster et prend les décisions sur les utilisateurs à servir. On parle alors d'une réalisation d'un « ordonnancement » (ou « scheduling » en anglais). A partir des informations CI de tous les terminaux du cluster, le contrôleur central définit également les paramètres de transmission à utiliser, par exemple une matrice de pré-codage à utiliser dans le cas d'un pré-codage linéaire, ou encore le faisceau à activer dans le cas de faisceaux fixes.

L'existence d'un contrôleur central par cluster et l'échange d'informations entre les stations de base et le contrôleur central sont nécessaires car chaque station de base n'a connaissance dans les deux méthodes précitées que d'une partie des informations CI des terminaux nécessaires à la définition de l'ordonnancement et des paramètres de transmission.

Le document WO 2007/128135 décrit un système et une méthode de planification de trames OFDM. Chaque paquet est affecté à un compartiment de trame, ce qui équivaut à une décision temporaire quant au moment de transmettre le paquet. Chaque paquet est marqué avec une ou plusieurs métriques. Les métriques sont utilisées pour trier les paquets et prendre des décisions de planification. Les paquets sont analysés pour déterminer s'ils conviennent à la transmission MIMO.

Le document au nom de Alcatel Shanghai Bell et al. intitulé «Collaborative MIMO for LTE-A downlink», 3GPP TSG RAN WG1 Meeting #53bis, Varsovie, Pologne, 30 juin - 4 juillet 2008, propose de prendre en charge la technique Co-MIMO dans la norme LTE-A en tant qu'option MIMO améliorée pour atténuer l'interférence entre cellules et améliorer le débit du secteur. Co-MIMO, basé sur les résultats de simulation et d'analyse existants de diverses entreprises, constitue un complément important à la technique MIMO à une seule station de base, telle que SU-MIMO et MU-MIMO. En particulier, une seule station de base MIMO peut être utilisée au centre de la cellule pour améliorer le débit de données de crête (par SU-MIMO) et le débit du secteur (par MU-MIMO), tandis que Co-MIMO peut être utilisé en bordure de cellule pour mieux contrôler l'interférence entre cellules et améliorer le débit en bordure de cellule.

Selon la technique antérieure décrite notamment dans le document :
*"Collaborative MIMO Based on Multiple Base Station Coordination",* Y. Song, L. Cai, K. Wu et H. Yang, Contribution to IEEE 802.16m, IEEE C802.16m-07/162, la mise en œuvre des communications coopératives multicellulaires suit les trois phases suivantes.

Dans une première phase, chaque terminal estime les canaux de transmission entre ses antennes et les antennes de chacune des stations de base du cluster de coopération. Par exemple, si chaque terminal possède une seule antenne, et si B stations de base coopèrent et possèdent deux antennes chacune, chaque terminal estime 2xB informations CSI. De même, chaque terminal estime une information CQI pour chaque station de base.

Dans une deuxième phase, les terminaux transmettent sur la voie de retour de chaque station de base du cluster les informations CSI et CQI locales à cette station de base en utilisant sur chaque voie de retour une puissance et un schéma de modulation et codage appropriés afin que la station de base puisse décoder le message. On note que la puissance et le schéma de modulation et codage peuvent être différents sur chaque voie de retour, puisqu'ils dépendent de la qualité du canal sur la voie de retour. Par conséquent chaque station de base du cluster rassemble des informations CI locales.
Les stations de base transmettent finalement les informations CI locales vers le contrôleur central du cluster.

Dans une troisième phase, le contrôleur central prend les décisions d'ordonnancement des utilisateurs. Le contrôleur central décide ensuite des paramètres de transmission à utiliser. Il calcule par exemple une matrice de pré-codage linéaire. Enfin, le contrôleur central envoie les informations correspondant à ses décisions à chaque station de base du cluster.

On note que dans le cas d'un Duplexage par Division de Temps (ou duplexage TDD), comme considéré dans le document précité, la première phase et l'opération de transmission de l'information CSI locale de la deuxième phase sont simplifiées car une station de base peut directement estimer les informations CSI des mobiles dans sa cellule. Dans le cas du duplexage TDD, le canal uplink est en effet identique au canal downlink (selon un principe de réciprocité du canal). Néanmoins, toutes les autres opérations sont inchangées.

De plus, on note que le document précité propose une simplification des communications coopératives multicellulaires, en limitant l'échange d'information CI entre stations de base à l'information CQI, chaque station de base formant une matrice de pré-codage linéaire d'après son information CSI locale uniquement. Cette réduction des échanges nécessaires entre les stations de base et le contrôleur central simplifie le système, mais au prix d'une dégradation des performances car l'interférence intercellulaire ne peut alors être traitée de manière efficace.

La technique antérieure, même comme simplifiée" dans le document précité, exige un coût d'infrastructure élevé par rapport à la structure actuelle des systèmes cellulaires, car elle nécessite un contrôleur central par cluster de coopération, ainsi que des liens de faible latence entre stations de base et contrôleur central. En outre, il est nécessaire de définir de nouveaux protocoles afin que les entités du cluster de coopération (contrôleur central et stations de base) inter-opèrent correctement, notamment pour coordonner :
- l'échange entre les stations de base et le contrôleur central des informations CI locales (deuxième phase),
- des informations sur les utilisateurs sélectionnés par une unité d'ordonnancement (troisième phase),
- ainsi que des informations concernant les paramètres de transmission (troisième phase).

La présente invention vient améliorer la situation.

Elle propose à cet effet un procédé de télécommunication sans fil dans lequel un point d'accès est apte à transmettre un signal à au moins un terminal via un canal de transmission. Le procédé de télécommunication étant mis en œuvre dans un système comportant au moins :
- un premier et un deuxième point d'accès,
- un premier et un deuxième terminal pouvant être desservis par lesdits premier et deuxième points d'accès.

Le premier terminal étant agencé pour estimer des premiers canaux de transmission entre ledit premier terminal et lesdits premier et deuxième points d'accès et le deuxième terminal étant agencé pour estimer des deuxièmes canaux de transmission entre ledit deuxième terminal et lesdits premier et deuxième points d'accès. Dans le procédé au sens de l'invention, on prévoit que les premier et deuxième points d'accès comportent des moyens de traitement homologues pour ordonner la desserte des terminaux selon un critère prédéterminé commun aux premier et deuxième points d'accès.
Dans le document, il faut comprendre par point d'accès aussi bien un point d'accès d'un réseau sans fil par exemple conforme à un standard de la famille IEEE 802.11 communément appelé WIFI ou de la famille IEEE802.16 qu'une station de base d'un réseau mobile par exemple UMTS.
On prévoit également
a. une estimation par le premier terminal desdits premiers canaux de transmission et par le deuxième terminal des desdits deuxièmes canaux de transmissions,
b. une communication aux premier et deuxième points d'accès d'une première indication sur les premiers canaux de transmission par ledit premier terminal et d'une deuxième indication sur les deuxièmes canaux de transmission par ledit deuxième terminal,
c. une desserte conjointe par les premier et deuxième points d'accès desdits terminaux, dans un ordre déterminé par lesdits moyens de traitement, en utilisant des paramètres de transmission sur la base desdites première et deuxième indications.
L'estimation d'un canal est entendue comme une estimation qui peut prendre en compte l'état du canal et/ou la qualité du canal. Cette estimation peut par exemple, d'une part, évaluer l'état du canal par des coefficients de canal ou une matrice de covariance associée à ces coefficients et aussi d'autre part, évaluer la qualité du canal par exemple en calculant un rapport signal sur interférence et bruit. La desserte conjointe d'un terminal par lesdits premier et deuxième points d'accès correspond à la transmission sensiblement simultanée d'un signal audit terminal par le premier et deuxième point d'accès. La desserte conjointe est mise en œuvre au sens de l'invention sans la nécessité d'une communication entre les premier et deuxième points d'accès ou d'une communication entre les points d'accès et un « contrôleur central » au sens de l'art antérieur.
Dans un mode de réalisation, les premier et deuxième points d'accès desservent conjointement au moins deux terminaux simultanément. Ceci permet de faire du SDMA et d'augmenter ainsi la capacité globale du système.

Dans un mode de réalisation, ledit critère prédéterminé commun se fonde sur lesdites première et deuxième indications sur les premiers et deuxièmes canaux. Ceci permet de prendre en compte les mêmes paramètres dans l'ordonnancement de la desserte par les moyens de traitement.

Dans un mode de réalisation, on prévoit que
- les premier et deuxième points d'accès établissent respectivement une première et une deuxième liste des terminaux couverts par les premier et deuxième points d'accès,
- lesdites première et deuxième listes étant classées suivant un ordre commun et,
- lesdits moyens de traitement de chaque point d'accès ordonnent la desserte successive des terminaux selon leur classement dans la liste, par groupe d'au moins un terminal.
Un terminal est dit couvert par un point d'accès s'il est identifié par le point d'accès comme devant être servi par ce point d'accès.
Dans un mode de réalisation dans lequel un numéro unique d'identifiant est attribué aux terminaux, le procédé prévoit que lesdites première et deuxième listes sont classées suivant un ordre fonction des numéros d'identifiant des terminaux.

Dans un mode de réalisation, lesdites première et deuxième indications comportent au moins une information sur les coefficients des canaux de transmission.

Dans un mode de réalisation, lesdites première et deuxième indications comportent au moins une information sur des rapports signal sur interférence et bruit des canaux de transmission.

Dans un mode de réalisation, dans lequel lesdites première et deuxième indications comportent une information sur des rapports signal sur interférence et bruit desdits premiers et deuxièmes canaux de transmission, on prévoit que ledit critère commun pour ordonner la desserte des terminaux est de servir au moins un terminal dont un canal de transmission a un rapport signal sur interférence et bruit maximal.

Dans un mode de réalisation, un groupe de coopération comportant lesdits points d'accès desservant conjointement lesdits terminaux est définit. Ledit système comporte en outre un ou plusieurs points d'accès qui n'appartiennent pas audit groupe de coopération (et qui génèrent donc de l'interférence pour l'un au moins desdits terminaux). Dans un tel mode de réalisation, la première et deuxième indications comportent une information relative à un rapport signal sur interférence et bruit associé respectivement au premier et deuxième terminal. La puissance de signal, dans un rapport signal sur interférence et bruit associé à un terminal, est définie comme la somme des puissances reçues par ledit terminal des points d'accès appartenant au groupe de coopération. La puissance de l'interférence, dans un rapport signal sur interférence et bruit associé à un terminal, est définie comme la somme des puissances reçues par ledit terminal des points d'accès n'appartenant pas audit groupe de coopération.
Les points d'accès desservant conjointement les terminaux comportent les points d'accès qui mettent en œuvre des communications coopératives vers les terminaux, notamment les premier et deuxième points d'accès.

Dans un mode de réalisation, lesdites première et deuxième indications comportent chacune au moins une information sur un premier faisceau pouvant être rendu actif par le premier point d'accès et sur un deuxième faisceau pouvant être rendu actif par le deuxième point d'accès, lesdits premier et deuxième faisceaux étant susceptibles d'être reçus par le terminal avec un maximum de puissance.

La présente invention vise aussi un système de télécommunications comportant au moins
- un premier et un deuxième point d'accès,
- un premier et un deuxième terminal pouvant être desservis par lesdits premier et deuxième points d'accès.

Le premier terminal étant agencé pour estimer des premiers canaux de transmission entre ledit premier terminal et lesdits premier et deuxième points d'accès et le deuxième terminal étant agencé pour estimer des deuxièmes canaux de transmission entre ledit deuxième terminal et lesdits premier et deuxième points d'accès. Dans un système au sens de l'invention, on prévoit que les premier et deuxième points d'accès comportent des moyens de traitement homologues pour ordonner la desserte des terminaux selon un critère prédéterminé commun aux premier et deuxième points d'accès et que :
a. le premier terminal estime les premiers canaux de transmission et le deuxième terminal estime les deuxièmes canaux de transmission,
b. le premier terminal communique aux premier et deuxième points d'accès une première indication sur les premiers canaux de transmission et le deuxième terminal communique aux premier et deuxième points d'accès une deuxième indication sur les deuxièmes canaux de transmission,
c. les premier et deuxième points d'accès desservent conjointement les premier et deuxième terminaux, dans un ordre déterminé par lesdits moyens de traitement, en utilisant des paramètres de transmission sur la base desdites première et deuxième indications.

L'invention vise aussi un module d'un point d'accès selon le système décrit précédemment qui reçoit lesdites première et deuxième indications des terminaux et qui comporte des moyens de traitement pour ordonner la desserte des terminaux en activant des canaux de transmission sur la base desdites première et deuxième indications.

L'invention vise aussi un programme d'ordinateur d'un module d'un point d'accès selon le système décrit précédemment qui comporte des instructions pour la mise en œuvre du procédé décrit ci-avant lorsque ce programme est exécuté par un processeur. En particulier, un tel programme peut être avantageux pour la mise en œuvre de la desserte en activant des canaux de transmission sur la base desdites premières et deuxième indications.

Ainsi, l'invention propose de résoudre les inconvénients de la technique antérieure, en permettant de mettre en œuvre les communications coopératives multicellulaires sans changer fondamentalement l'architecture des réseaux cellulaires, c'est-à-dire sans besoin d'un contrôleur central, ni de liens de faible latence entre les points d'accès (stations de base) et le contrôleur central.

En particulier, on s'appuie ici sur la transmission par chaque terminal de son information CI à l'ensemble des points d'accès (stations de base) du cluster de coopération. Chaque points d'accès (station de base) du cluster a ainsi connaissance des informations CQI et CSI de l'ensemble des terminaux couverts par le cluster de coopération (informations CI locales et informations CI non-locales), et peut alors réaliser l'ordonnancement des utilisateurs et définir les paramètres de transmission sans besoin d'échanger des informations CI avec une entité centrale. Cette réalisation conduit finalement au même ordonnancement de desserte des terminaux et au même choix des paramètres de transmission à utiliser par les points d'accès (stations de bases) qui coopèrent entre eux, que dans le cas d'un recours à une entité centrale d'ordonnancement au sens de l'art antérieur. On réalise toutefois ici l'économie d'une telle entité.
Puisque les terminaux sélectionnés sont servis simultanément par points d'accès (les stations de base) du cluster, les points d'accès (stations de base) opèrent de façon synchronisée pour la mise en œuvre des communications coopératives multicellulaires.

D'autres caractéristiques et avantages de l'invention apparaîtront à l'examen de la description détaillée ci-après d'exemples particuliers, et des dessins annexés sur lesquels :
- la figure 1A illustre l'étape d'estimation par les terminaux des canaux de transmission au sens de l'art antérieur,
- la figure 1B illustre l'étape d'estimation par les terminaux des canaux de transmission au sens de l'invention,
- la figure 2A illustre l'étape de communication d'une indication sur des canaux de transmission par les terminaux au sens de l'art antérieur,
- la figure 2B illustre l'étape de communication d'une indication sur des canaux de transmission par les terminaux au sens de l'invention,
- la figure 3A illustre l'étape transmission du signal par les stations de base aux terminaux au sens de l'art antérieur,
- la figure 3B illustre l'étape transmission du signal par les stations de base aux terminaux au sens de l'invention.

Dans une mise en œuvre de l'invention, la première phase précitée relative à l'art antérieur peut rester la même, en particulier dans le cas d'une communication en duplexage FDD. Dans le cas d'une communication en duplexage TDD, la première étape est inutile dans une réalisation selon la technique antérieure. Néanmoins, dans une réalisation au sens de l'invention, il est préférable de la mettre en œuvre. Ainsi, chaque terminal estime les canaux de transmission entre son (ou ses) antenne(s) et les antennes de chacune des stations de base du cluster de coopération. De plus, chaque terminal estime une information CQI pour chacune des stations de base du cluster. Dans une variante, chaque terminal estime une seule information CQI représentant la qualité de la somme des canaux de toutes les stations de base du cluster.

Dans la deuxième phase, les terminaux peuvent transmettre sur la voie de retour leur information CI à toutes les stations de base du cluster de coopération, avec une puissance et un schéma de modulation et de codage appropriés afin que toutes les stations de base du cluster puissent décoder le message. On note que la voie de retour peut avantageusement être la même pour toutes les stations de base du cluster afin de limiter le nombre de blocs de ressources radio nécessaire. Ainsi, toutes les stations de base du cluster rassemblent les informations CI de tous les terminaux couverts par le cluster.

Dans la troisième phase, chaque station de base prend les décisions d'ordonnancement des utilisateurs sans communication avec les autres stations de base du cluster. Puisque toutes les stations de base du cluster sont synchronisées et utilisent le même algorithme d'ordonnancement, elles sélectionnent les mêmes terminaux. Ensuite, chaque station de base choisit les paramètres de transmission pour chaque utilisateur sélectionné sans communication avec les autres stations de base du cluster.

Ainsi, les communications coopératives multicellulaires peuvent être mises en œuvre sans nécessiter de changements lourds d'architecture par rapport à l'architecture actuelle des réseaux cellulaires. En particulier, la mise en œuvre de l'invention permet de s'affranchir :
- d'un contrôleur central par cluster de coopération,
- et des liens à faible latence entre les stations de base du cluster et le contrôleur central.

En outre, l'invention ne nécessite pas une complexité protocolaire élevée pour coordonner les échanges des données entre les stations de base et un éventuel contrôleur central du cluster.

Par ailleurs, contrairement à la technique simplificatrice décrite dans le document précité de la technique antérieure, l'invention permet de communiquer les informations CSI non-locales aux stations de base du cluster, ce qui permet de mettre en œuvre des techniques de transmission efficaces contre l'interférence intercellulaire, comme le pré-codage linéaire distribué entre les antennes du cluster.

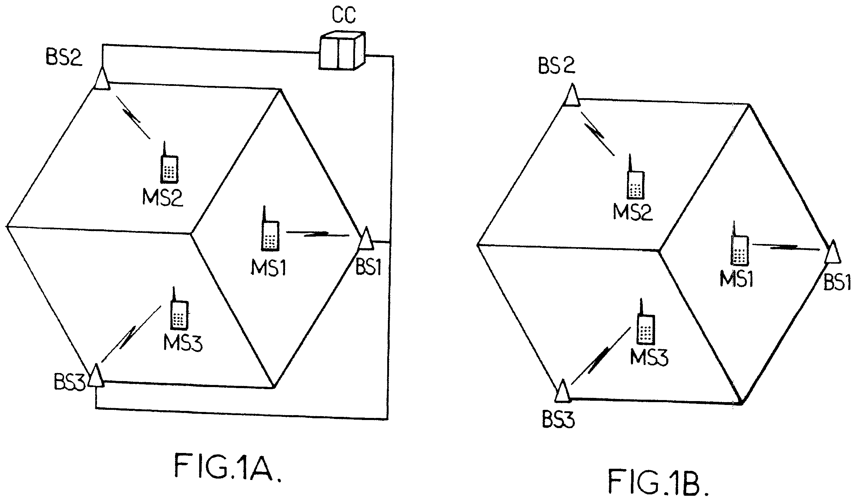

On se réfère maintenant aux dessins qui comparent les première, deuxième et troisième phases de l'art antérieur (figures 1A, 2A, 3A), d'une part, et au sens de l'invention (figure 1B, 2B, 3B, respectivement), d'autre part.

Les mêmes références sur les dessins désignent de mêmes éléments d'une figure à l'autre.

Les informations CI sur les canaux de transmission entre un terminal MSi et une station de base BSj sont notées ci-après h_{i,j}.

La première phase illustrée sur les figures 1A et 1B vise l'estimation, par chaque terminal utilisateur MS1, MS2, MS3, des canaux qui le relient à chaque station de base BS1, BS2, BS3. Chaque terminal MSi estime les informations CI (h_{i,1}, h_{i,2}, h_{i,3}). On relèvera sur la figure 1A relative à l'art antérieur que chaque station de base est reliée à un contrôleur central CC et que ce contrôleur peut être absent dans la figure 1B relative à l'invention. En dehors de cette observation, les premières phases respectives de l'art antérieur, d'une part, et au sens de l'invention, d'autre part, pour l'estimation de canal, notamment, peuvent être identiques.

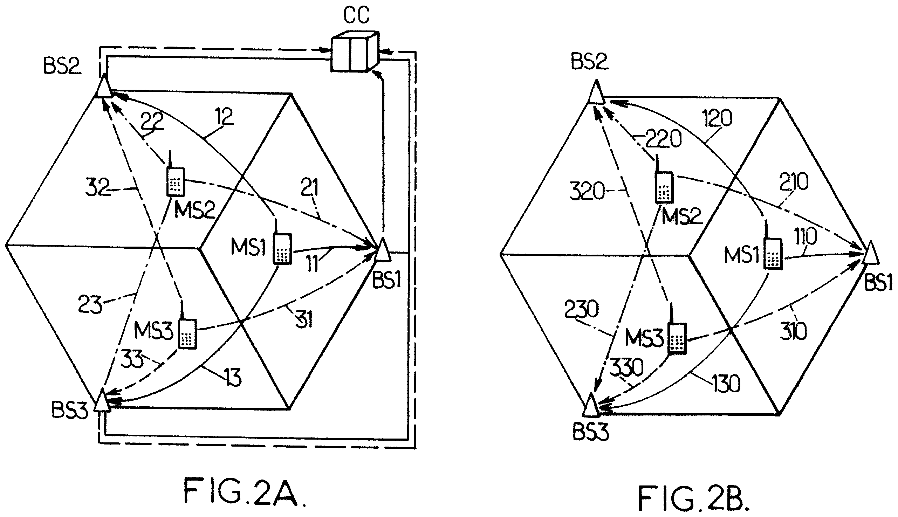

On se réfère maintenant aux figures 2A et 2B. Dans la deuxième phase de la technique antérieure (figure 2A), les terminaux transmettent sur la voie de retour de chaque station de base du cluster des informations CI locales à cette station de base. Chaque terminal MSi transmet par voie de retour à chaque station de base BSj l'information h_{i,j}.
Les flèches 11, 12 et 13 représentent les transmissions depuis le terminal MS1 de respectivement, l'information h_{1,1} à la station de base BS1, l'information h_{1,2} à la station de base BS2 et l'information h_{1,3} à la station de base BS3.
Les flèches 21, 22 et 23 représentent les transmissions depuis le terminal MS2 de respectivement, l'information h_{2,1} à la station de base BS1, l'information h_{2,2} à la station de base BS2 et l'information h_{2,3} à la station de base BS3.
Les flèches 31, 32 et 33 représentent les transmissions depuis le terminal MS3 de respectivement, l'information h_{3,1} à la station de base BS1, de l'information h_{3,2} à la station de base BS2 et de l'information h_{3,3} à la station de base BS3.
Puis, les stations de base transmettent les informations CI locales reçues de tous les terminaux vers le contrôleur central du cluster en utilisant les liens adaptés entre les stations de base et le contrôleur central CC.

En revanche, au sens de l'invention (figure 2B), les terminaux peuvent transmettre par voie de retour leur information CI locale et non-locale à toutes les stations de base du cluster de coopération. Chaque terminal MSi transmet à chaque station de base BSj l'information CI h_{i,1}, l'information CI h_{i,2} et l'information CI h_{i,3}. L'ensemble d'informations composé des informations CI h_{i,1}, h_{i,2} et h_{i,3} est noté ci-après sous la forme d'un triplet (h_{i,1}, h_{i,2}, h_{i,3}) pour plus de clarté.

Les flèches 110, 120 et 130 représentent la transmission de l'information (h_{i,1}, h_{1,2}, h_{1,3}) depuis le terminal MS1 respectivement vers les stations de base BS1, Bs2 et BS3. Les flèches 210, 220 et 230 représentent la transmission de l'information (h_{2,1}, h_{2,2}, h_{2,3}) depuis le terminal MS2 respectivement vers les stations de base BS1, Bs2 et BS3. Les flèches 310, 320 et 330 représentent la transmission de l'information (h_{3,1}, h_{3,2}, h_{3,3}) depuis le terminal MS3 respectivement vers les stations de base BS1, Bs2 et BS3. Par exemple, sur la figure 2B, les terminaux peuvent transmettre par voie de retour leur estimé des canaux à toutes les stations de base du cluster de coopération, avec une puissance et un schéma de modulation et codage appropriés afin que toutes les stations de base du cluster puissent décoder le message. Ainsi, toutes les stations de base du cluster rassemblent les informations CI des terminaux couverts par l'ensemble des stations de base du cluster.

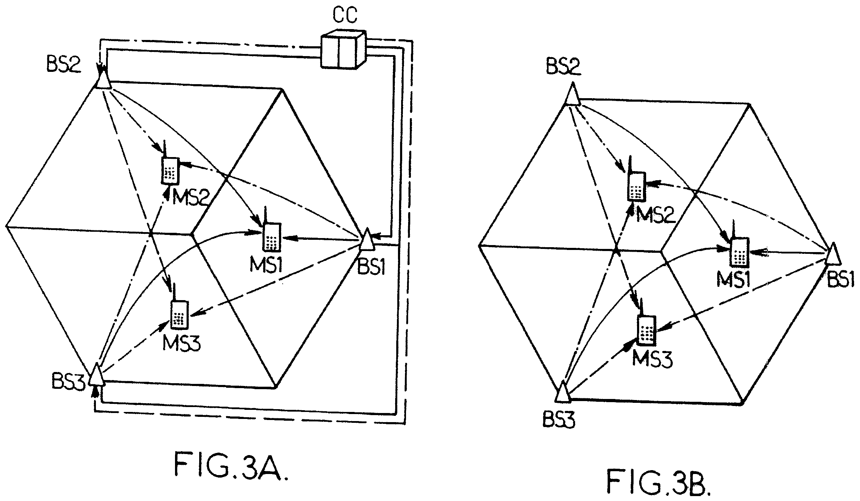

Par ailleurs, la troisième phase au sens de l'art antérieur (figure 3A) est modifiée aussi par la mise en œuvre de l'invention (figure 3B). Sur la figure 3A, au sens de la technique antérieure, l'ordonnancement des utilisateurs est mené par le contrôleur central. Le choix des paramètres de transmission pour chaque utilisateur sélectionné et l'envoi des informations correspondantes à chaque station de base s'effectue aussi par le contrôleur central CC.

En revanche, au sens de l'invention, dans la troisième phase, chaque station de base prend les décisions d'ordonnancement des utilisateurs sans communication avec les autres stations de base du cluster. En effet, puisque toutes les stations de base du cluster sont synchronisées et utilisent le même algorithme d'ordonnancement, elles décident du même ordre de desserte des terminaux et sélectionnent donc conjointement les mêmes terminaux. Chaque station de base détermine aussi les paramètres de transmission à utiliser pour chaque terminal sélectionné sans communication avec les autres stations de base, ces paramètres de transmission pouvant tenir compte des informations CSI entre les terminaux sélectionnés et toutes les stations de base du cluster.

Ainsi, chaque station de base peut prendre les décisions d'ordonnancement des terminaux utilisateurs sans communication avec les autres stations de base du cluster. En effet, puisque en particulier toutes les stations de base du cluster sont synchronisées, disposent des mêmes informations CI et utilisent le même algorithme d'ordonnancement, elles définissent donc le même ordonnancement des terminaux. Il s'ensuit que chaque station de base peut déterminer les paramètres de transmission à utiliser pour les terminaux sélectionnés sans communication avec les autres stations de base du cluster. En outre, ces paramètres de transmission peuvent être optimisés en fonction des informations CSI entre les terminaux sélectionnés et toutes les stations de base du cluster. Des exemples sont décrits ultérieurement pour expliciter cette optimisation.

On comprendra alors que l'ordonnancement au sens de l'invention est effectué de manière décentralisée : des stations de base distinctes peuvent prendre les mêmes décisions d'ordonnancement sans communiquer entre elles, ce qui est permis par le fait que chacune possède l'information sur les informations CI de tous les terminaux couverts par le cluster, et qu'elles utilisent le même algorithme d'ordonnancement. On note que cet ordonnancement décentralisé conduit aux mêmes performances qu'un ordonnancement centralisé, puisque les informations CI et l'algorithme utilisé sont les mêmes.

On peut prévoir deux modes de réalisation d'ordonnancement décentralisé.

Tout d'abord, on peut considérer un ordonnancement de type dit « Round-Robin », qui consiste à servir tous les terminaux à tour de rôle. Cet ordonnancement peut être réalisé de manière décentralisée comme suit.

On suppose que chaque terminal est identifié par un numéro unique (ce qui est généralement le cas en pratique). Chaque station de base établit une liste des terminaux à servir dans la zone de couverture du cluster, rangée par exemple dans l'ordre croissant des numéros des terminaux (ce qui peut être prédéfini dans le paramétrage de la station de base). Cette liste est alors la même pour chaque station de base du cluster. Pour que toutes les stations de bases du cluster servent le même groupe de terminaux à chaque instant, il suffit que les stations de base lisent la liste de la même façon. A cet effet, on peut par exemple forcer les stations de bases à servir le premier groupe de terminaux de la liste à la réception d'un signal de synchronisation envoyé périodiquement par le réseau. On rappelle en effet que les stations de base sont synchronisées.

On impose alors aux stations de base qu'à chaque nouveau temps TTI, chaque station de base serve le groupe de terminaux suivant dans la liste précitée. Ainsi, les terminaux qui sont choisis par chaque station de base sont les mêmes à chaque temps TTI.

Si on souhaite mettre en œuvre du SDMA et servir par exemple deux terminaux à la fois, la liste peut être lue par groupe de deux terminaux: par exemple, au temps TTI n, les stations de bases servent les deux premiers terminaux de la liste, et au temps TTI n+1 les stations de bases serviront les troisième et quatrième terminaux, et ainsi de suite. Le nombre de terminaux à servir à chaque temps TTI peut être prédéfini dans la configuration des stations de base, ou peutt être décidé par la station de base à chaque temps TTI en fonction des informations CI.
En particulier, le nombre de terminaux à servir à chaque temps TTI pourra être égal à l'unité si on ne souhaite pas mettre en œuvre de SDMA ; dans ce cas de figure, un seul terminal est servi à la fois à chaque temps TTI.

Dans une variante d'application au cas d'une utilisation d'un algorithme d'ordonnancement visant à maximiser le rapport signal sur interférence et bruit des terminaux servis, le terminal servi à chaque temps TTI est celui qui a remonté par voie de retour la meilleure qualité de canal évaluée d'après l'information CQI. Cette qualité de canal peut par exemple être définie par un rapport signal sur interférence et bruit, où la puissance du signal est la somme des puissances reçues de chaque station de base du cluster, et où la puissance de l'interférence est la somme des puissances reçues des stations de base n'appartenant pas au cluster. Dans une autre variante, le terminal remonte un rapport signal sur interférence et bruit par station de base du cluster, où la puissance du signal est la puissance reçue de la station de base considérée et où la puissance de l'interférence est la somme des puissances reçues des autres stations de base. Comme l'invention implique pour un terminal de transmettre la même information par voie de retour à toutes les stations de bases du cluster, le terminal ayant remonté la meilleure qualité de canal (évaluée d'après l'information CQI) est le même pour chaque station de base du cluster. Chaque station de base du cluster sert donc le même terminal à chaque temps TTI. Dans cette variante, on peut également servir plusieurs terminaux au même temps TTI. Par exemple, si on souhaite servir deux terminaux à chaque temps TTI, les terminaux sélectionnés sont ceux qui ont remonté par voie de retour les deux meilleures qualités de canal évaluées d'après les informations CQI.

Une fois que le ou les terminaux à servir sont sélectionnés par l'ordonnanceur, les paramètres de transmission peuvent être optimisés en fonction des informations CSI de l'ensemble des terminaux couverts par le cluster de coopération (informations CSI locales et informations CSI non-locales).

Par exemple, si l'information CSI est composée des coefficients des canaux de transmissions, une matrice de pré-codage linéaire peut être calculée pour mettre en œuvre une formation de voies selon le critère du forçage à zéro (ou Zero-Forcing beamforming en anglais). Toutes les stations de base du cluster de coopération disposant des mêmes informations CSI, chaque station de base calcule la même matrice. Chaque station de base applique ensuite au signal émis sur chacune de ses antennes les coefficients de pondération donnés par les lignes correspondant à cette station de base dans la matrice calculée. Ainsi, le zero-forcing beamforming peut être mis en œuvre pour les coopérations coopératives multicellulaires sans nécessiter de communication entre les stations de base du cluster, ni entre les stations de base du cluster et un contrôleur central.

Dans un autre exemple, le pré-codage linéaire est réalisé à partir de faisceaux fixes. L'information CSI transmise par voie de retour par chaque terminal peut alors être composée d'une indication, pour une station de base donnée du cluster de coopération, sur le faisceau reçu avec le maximum de puissance par ce terminal. Par exemple, si le cluster est formé de trois stations de base, le terminal peut transmettre par voie de retour trois entiers, le premier entier représentant le numéro du faisceau reçu avec le maximum de puissance de la part de la première station de base, le deuxième entier représentant le numéro du faisceau reçu avec le maximum de puissance de la part de la deuxième station de base, et le troisième entier représentant le numéro du faisceau reçu avec le maximum de puissance de la part de la troisième station de base. Si on ne souhaite servir qu'un seul terminal par temps TTI, alors chaque station de base du cluster sert le terminal sélectionné par l'ordonnanceur, par exemple en utilisant l'un ou l'autre des algorithmes d'ordonnancement précédemment décrits, en utilisant le faisceau indiqué par le terminal comme étant reçu avec le maximum de puissance relativement à cette station de base.

Dans une autre variante, l'ordonnancement peut dépendre aussi des informations CSI. Par exemple, si on souhaite servir deux terminaux par temps TTI en mettant en œuvre du SDMA, les décisions sur les terminaux à servir à chaque temps TTI peuvent être optimisées grâce aux informations CSI afin de minimiser l'interférence créée par le signal destiné au premier terminal sur le deuxième terminal, et l'interférence créée par le signal destiné au deuxième terminal sur le premier terminal.

On décrit dans ce qui suit un exemple de réalisation d'un tel ordonnancement dans le cas où la transmission s'effectue à l'aide de faisceaux fixes, pour deux terminaux servis à chaque temps TTI en mettant en œuvre du SDMA.

L'ordonnancement décrit s'appuie sur un algorithme de type Round Robin décrit précédemment, modifié de la manière suivante pour prendre en compte les informations CSI. Chaque station de base établit une liste des terminaux à servir dans la zone de couverture du cluster comme décrit précédemment. Puis chaque station de base effectue une copie de cette liste, que l'on appelle dans la suite la liste courante. A chaque nouveau temps TTI, chaque station de base sélectionne le premier terminal dans la liste courante et lui attribue le faisceau fixe qu'il a indiqué comme étant reçu avec le maximum de puissance de la part de cette station de base. D'autre part, chaque station de base a connaissance des faisceaux fixes reçus avec le maximum de puissance par le premier terminal sélectionné de la part des autres stations de base du cluster. Pour sélectionner le deuxième terminal à servir sur les mêmes blocs de ressources que le premier terminal, chaque station de base examine successivement chaque terminal suivant dans la liste courante, et sélectionne le premier qui a indiqué par voie de retour des faisceaux reçus avec le maximum de puissance qui soient tous différents des faisceaux attribués au premier terminal sélectionné. En d'autres termes, aucune station de base n'est autorisée à servir plus d'un terminal dans un temps TTI donné en utilisant le même faisceau. Une fois que les deux terminaux à servir dans un temps TTI sont sélectionnés, chaque station de base sert les deux terminaux en utilisant pour chacun le faisceau indiqué comme étant reçu avec le maximum de puissance de la part de cette station de base. Ensuite, les deux terminaux servis sont supprimés de la liste courante, puis chaque station de base recommence le processus au TTI suivant en sélectionnant le premier terminal de la liste courante. On peut noter que la liste courante est donc réduite de deux terminaux par rapport à la liste courante au temps TTI précédent. Lorsque la liste courante est vide, tous les terminaux couverts par le cluster ont été servis. Chaque station de base crée alors une nouvelle liste courante en recopiant la liste originale, puis recommence le processus. On peut noter qu'il peut être parfois impossible de trouver un deuxième terminal à servir dans un temps TTI de telle sorte qu'aucun des faisceaux attribués au premier terminal sélectionné ne soit réutilisé. Dans ce cas, on peut choisir de ne servir que le premier terminal dans ce temps TTI.

## Revendications

1. Procédé de télécommunication sans fil dans lequel un point d'accès est apte à transmettre un signal à au moins un terminal via un canal de transmission, le procédé de télécommunication étant mis en œuvre dans un système comportant au moins :
- un premier et un deuxième point d'accès,
- un premier et un deuxième terminal pouvant être desservis par lesdits premier et deuxième points d'accès,
le premier terminal étant agencé pour estimer des premiers canaux de transmission entre ledit premier terminal et lesdits premier et deuxième points d'accès et le deuxième terminal étant agencé pour estimer des deuxièmes canaux de transmission entre ledit deuxième terminal et lesdits premier et deuxième points d'accès,
le procédé comportant une estimation par le premier terminal desdits premiers canaux de transmission et par le deuxième terminal desdits deuxièmes canaux de transmissions,
le procédé étant **caractérisé par** le fait de comporter:
a. une communication aux premier et deuxième points d'accès d'une première indication sur les premiers canaux de transmission par ledit premier terminal et d'une deuxième indication sur les deuxièmes canaux de transmission par ledit deuxième terminal ;
b. une desserte conjointe par les premier et deuxième points d'accès desdits terminaux, dans un ordre déterminé par les premier et deuxième points d'accès, en utilisant des paramètres de transmission sur la base desdites première et deuxième indications, les premier et deuxième points d'accès comportant des moyens de traitement homologues pour ordonner la desserte des terminaux selon un critère prédéterminé commun aux premier et deuxième points d'accès.

2. Procédé selon la revendication 1, **caractérisé en ce que** les premier et deuxième points d'accès desservent conjointement au moins deux terminaux simultanément.

3. Procédé selon la revendication 1, **caractérisé en ce que** :
- les premier et deuxième points d'accès établissent respectivement une première et une deuxième liste des terminaux couverts par les premier et deuxième points d'accès,
- lesdites première et deuxième listes étant classées suivant un ordre commun et,
- les premier et deuxième points d'accès ordonnent la desserte successive des terminaux selon leur classement dans la liste, par groupe d'au moins un terminal.

4. Procédé selon la revendication 3, dans lequel on attribue un numéro unique d'identifiant des terminaux, **caractérisé en ce que** lesdites première et deuxième listes sont classées suivant un ordre fonction des numéros d'identifiant des terminaux.

5. Procédé selon la revendication 1, **caractérisé en ce que** lesdites première et deuxième indications comportent au moins une information sur les coefficients des canaux de transmission.

6. Procédé selon la revendication 5, **caractérisé en ce qu'**une même matrice est calculée par les premier et deuxième points d'accès en fonction des coefficients des canaux de transmission, **en ce que** la matrice est composée d'une pluralité de lignes de coefficients de pondération, **en ce qu'**au moins une ligne de ladite matrice est associée à chacun desdits premier et deuxième points d'accès et **en ce que** pour chaque point d'accès, la desserte des premier et deuxième terminaux est ordonnée en fonction des coefficients de pondération de la ligne de matrice associée audit point d'accès.

7. Procédé selon la revendication 1, **caractérisé en ce que** lesdites première et deuxième indications comportent au moins une information sur des rapports signal sur interférence et bruit des canaux de transmission.

8. Procédé suivant la revendication 7, **caractérisé en ce que** ledit critère commun pour ordonner la desserte des terminaux est de servir au moins un terminal dont un canal de transmission a un rapport signal sur interférence et bruit maximal.

9. Procédé selon la revendication 1, dans lequel :
- un groupe de coopération comportant au moins lesdits points d'accès desservant conjointement lesdits terminaux est défini,
- ledit système comporte en outre un ou plusieurs points d'accès n'appartenant pas audit groupe de coopération; **caractérisé en ce que**:
la première et deuxième indications comportent au moins une information relative à un rapport signal sur interférence et bruit associé respectivement au premier et deuxième terminal,
la puissance de signal, dans un rapport signal sur interférence et bruit associé à un terminal, étant définie comme la somme des puissances reçues par ledit terminal des points d'accès appartenant au groupe de coopération, et
la puissance de l'interférence, dans un rapport signal sur interférence et bruit associé à un terminal, étant définie comme la somme des puissances reçues par ledit terminal des points d'accès n'appartenant pas audit groupe de coopération.

10. Procédé selon la revendication 1, **caractérisé en ce que** lesdites première et deuxième indications comportent chacune au moins une information sur un premier faisceau pouvant être rendu actif par le premier point d'accès et sur un deuxième faisceau pouvant être rendu actif par le deuxième point d'accès, lesdits premier et deuxième faisceaux étant susceptibles d'être reçus par le terminal avec un maximum de puissance.

11. Système de télécommunications comportant au moins:
- un premier et un deuxième point d'accès,
- un premier et un deuxième terminal pouvant être desservis par lesdits premier et deuxième points d'accès,
le premier terminal étant agencé pour estimer des premiers canaux de transmission entre ledit premier terminal et lesdits premier et deuxième points d'accès et
le deuxième terminal étant agencé pour estimer des deuxièmes canaux de transmission entre ledit deuxième terminal et lesdits premier et deuxième points d'accès,
le premier terminal estimant des premiers canaux de transmission et le deuxième terminal estimant des deuxièmes canaux de transmission,
**caractérisé en ce que**:
a. le premier terminal communique aux premier et deuxième points d'accès une première indication sur les premiers canaux de transmission et le deuxième terminal
communique aux premier et deuxième points d'accès une deuxième indication sur les deuxièmes canaux de transmission,
b. les premier et deuxième points d'accès desservent conjointement les premier et deuxième terminaux, dans un ordre déterminé par lesdits moyens de traitement, en utilisant des paramètres de transmission sur la base desdites première et deuxième indications, les premier et deuxième points d'accès comportent des moyens de traitement homologues pour ordonner la desserte des terminaux selon un critère prédéterminé commun aux premier et deuxième points d'accès.

12. Paire de points d'accès adaptés pour être utilisés dans un système de télécommunications,
chaque point d'accès de la paire comprenant des moyens pour recevoir
- une première indication sur des premiers canaux de transmission envoyée par un premier terminal, lesdits premiers canaux de transmission comprenant un canal entre le premier terminal et ledit point d'accès et un canal entre le premier terminal et l'autre point d'accès de la paire, lesdits premiers canaux étant estimés par le premier terminal et
- une deuxième indication sur des deuxièmes canaux de transmission envoyée par un deuxième terminal, lesdits deuxièmes canaux de transmission comprenant un canal entre le deuxième terminal et ledit point d'accès et un canal entre le deuxième terminal et l'autre point d'accès de la paire, lesdits deuxièmes canaux étant estimés par le deuxième terminal
lesdits point d'accès de la paire comportant des moyens de traitement homologues pour ordonner la desserte desdits terminaux selon un critère prédéterminé commun audits point d'accès dans un ordre déterminé par lesdits moyens de traitement, en utilisant des paramètres de transmission sur la base desdites première et deuxième indication.

13. Terminal adapté pour être utilisé dans un système de télécommunications, ledit terminal
pouvant être desservi par un premier et un deuxième points d'accès,
comprenant des moyens d'estimation de canaux de transmission entre ledit terminal et lesdits premier et deuxième points d'accès
étant agencé pour estimer les canaux de transmission entre ledit premier terminal et lesdits premier et deuxième points d'accès, comprenant des moyens pour recevoir des signaux émis conjointement par les premier et deuxième points d'accès
**caractérisé en ce que** le terminal comprend:
des moyens pour communiquer aux premier et deuxième points d'accès une indication sur lesdits canaux de transmission estimés par ledit terminal.

## Patentansprüche

1. Drahtloses Telekommunikationsverfahren, wobei ein Zugangspunkt in der Lage ist, ein Signal über einen Übertragungskanal an mindestens ein Endgerät zu übertragen,
wobei das Telekommunikationsverfahren in einem System implementiert wird, das mindestens umfasst:
- einen ersten und einen zweiten Zugangspunkt,
- ein erstes und ein zweites Endgerät, die vom ersten und zweiten Zugangspunkt bedient werden können,
wobei das erste Endgerät dafür eingerichtet ist, erste Übertragungskanäle zwischen dem ersten Endgerät und dem ersten und zweiten Zugangspunkt zu schätzen, und das zweite Endgerät dafür eingerichtet ist, zweite Übertragungskanäle zwischen dem zweiten Endgerät und dem ersten und zweiten Zugangspunkt zu schätzen,
wobei das Verfahren eine Schätzung der ersten Übertragungskanäle durch das erste Endgerät, und der zweiten Übertragungskanäle durch das zweite Endgerät umfasst,
wobei das Verfahren **dadurch gekennzeichnet ist, dass** es umfasst:
a. ein Kommunizieren einer ersten Angabe über die ersten Übertragungskanäle durch das erste Endgerät, und einer zweiten Angabe über die zweiten Übertragungskanäle durch das zweite Endgerät an den ersten und zweiten Zugangspunkt;
b. ein gemeinschaftliches Bedienen der Endgerät durch den ersten und zweiten Zugangspunkt in einer vom ersten und zweiten Zugangspunkt bestimmten Ordnung unter Verwendung von Übertragungsparametern auf Basis der ersten und zweiten Angabe, wobei der erste und zweite Zugangspunkt homologe Verarbeitungsmittel umfassen, um die Bedienung der Endgeräte gemäß einem vorbestimmten Kriterium, das dem ersten und zweiten Zugangspunkt gemein ist, anzuordnen.

2. Verfahren nach Anspruch 1, **dadurch gekennzeichnet, dass** der erste und zweite Zugangspunkt gemeinschaftlich mindestens zwei Endgeräte gleichzeitig bedienen.

3. Verfahren nach Anspruch 1, **dadurch gekennzeichnet, dass**:
- der erste und zweite Zugangspunkt jeweils eine erste und eine zweite Liste der Endgeräte erstellen, die vom ersten und zweiten Zugangspunkt abgedeckt werden,
- die erste und zweite Liste nach einer gemeinsamen Ordnung klassiert werden, und
- der erste und zweite Zugangspunkt die aufeinanderfolgende Bedienung der Endgeräte gemäß ihrer Klassierung in der Liste pro Gruppe von mindestens einem Endgerät anordnen.

4. Verfahren nach Anspruch 3, wobei eine eindeutige Kennnummer der Endgeräte zugewiesen wird, **dadurch gekennzeichnet, dass** die erste und zweite Liste nach einer Ordnung klassiert werden, die von den Kennnummern der Endgeräte abhängig ist.

5. Verfahren nach Anspruch 1, **dadurch gekennzeichnet, dass** die erste und zweite Angabe mindestens eine Information über die Koeffizienten der Übertragungskanäle umfassen.

6. Verfahren nach Anspruch 5, **dadurch gekennzeichnet, dass** vom ersten und zweiten Zugangspunkt in Abhängigkeit von den Koeffizienten der Übertragungskanäle ein und dieselbe Matrix berechnet wird, dadurch, dass die Matrix aus einer Vielzahl von Zeilen von Gewichtungskoeffizienten besteht, dadurch, dass mit jedem aus dem ersten und zweiten Zugangspunkt mindestens eine Zeile der Matrix verknüpft ist, und dadurch, dass bei jedem Zugangspunkt die Bedienung des ersten und zweiten Endgeräts in Abhängigkeit von den Gewichtungskoeffizienten der Matrixzeile, die mit dem Zugangspunkt verknüpft ist, angeordnet wird.

7. Verfahren nach Anspruch 1, **dadurch gekennzeichnet, dass** die erste und zweite Angabe mindestens eine Information über Signal-zu-Interferenz- und Rausch-Verhältnisse der Übertragungskanäle umfassen.

8. Verfahren nach Anspruch 7, **dadurch gekennzeichnet, dass** das gemeinsame Kriterium, um die Bedienung der Endgeräte anzuordnen, lautet, dass mindestens ein Endgerät bedient wird, von dem ein Übertragungskanal ein maximales Signal zu Interferenz und Rausch Verhältnis aufweist.

9. Verfahren nach Anspruch 1, wobei:
- eine Kooperationsgruppe definiert wird, die mindestens die Zugangspunkte umfasst, die die Endgeräte gemeinschaftlich bedienen,
- das System weiter einen oder mehrere Zugangspunkt umfasst, die nicht zur Kooperationsgruppe gehören; **dadurch gekennzeichnet, dass**:
die erste und zweite Angabe mindestens eine Information umfassen, die sich auf ein Signal-zu-Interferenz- und Rausch-Verhältnis bezieht, das jeweils mit dem ersten und zweiten Endgerät verknüpft ist,
die Signalleistung in einem Signal-zu-Interferenz- und Rausch-Verhältnis, das mit einem Endgerät verknüpft ist, als die Summe der Leistungen definiert ist, die vom Endgerät von den Zugangspunkten empfangen wird, die zur Kooperationsgruppe gehören, und
die Leistung der Interferenz in einem Signal-zu-Interferenz- und Rausch-Verhältnis, das mit einem Endgerät verknüpft ist, als die Summe der Leistungen definiert ist, die vom Endgerät von den Zugangspunkten empfangen wird, die nicht zur Kooperationsgruppe gehören.

10. Verfahren nach Anspruch 1, **dadurch gekennzeichnet, dass** die erste und zweite Angabe jede mindestens eine Information über einen ersten Strahl, der vom ersten Zugangspunkt aktiviert werden kann, und über einen zweiten Strahl umfassen, der vom zweiten Zugangspunkt aktiviert werden kann, wobei der erste und zweite Strahl vom Endgerät mit einem Leistungsmaximum empfangen werden können.

11. Telekommunikationssystem, das mindestens umfasst:
- einen ersten und einen zweiten Zugangspunkt,
- ein erstes und ein zweites Endgerät, die vom ersten und zweiten Zugangspunkt bedient werden können,
wobei das erste Endgerät dafür eingerichtet ist, erste Übertragungskanäle zwischen dem ersten Endgerät und dem ersten und zweiten Zugangspunkt zu schätzen, und
wobei das zweite Endgerät dafür eingerichtet ist, zweite Übertragungskanäle zwischen dem zweiten Endgerät und dem ersten und zweiten Zugangspunkt zu schätzen,
wobei das erste Endgerät erste Übertragungskanäle schätzt, und das zweite Endgerät zweite Übertragungskanäle schätzt,
**dadurch gekennzeichnet, dass**:
a. das erste Endgerät dem ersten und zweiten Zugangspunkt eine erste Angabe über die ersten Übertragungskanäle kommuniziert, und das zweite Endgerät dem ersten und zweiten Zugangspunkt eine zweite Angabe über die zweiten Kommunikationskanäle kommuniziert,
b. der erste und zweite Zugangspunkt das erste und zweite Endgerät gemeinschaftlich in einer von den Verarbeitungsmitteln bestimmten Ordnung unter Verwendung von Übertragungsparametern auf Basis der ersten und zweiten Angabe bedienen, wobei der erste und zweite Zugangspunkt homologe Verarbeitungsmittel umfassen, um die Bedienung der Endgeräte gemäß einem vorbestimmten Kriterium, das dem ersten und zweiten Zugangspunkt gemein ist, anzuordnen.

12. Paar von Zugangspunkten, die dafür geeignet sind, in einem Telekommunikationssystem verwendet zu werden,
wobei jeder Zugangspunkt des Paares Mittel umfasst zum Empfangen
- einer ersten Angabe über erste Übertragungskanäle, die von einem ersten Endgerät gesendet wird, wobei die ersten Übertragungskanäle einen Kanal zwischen dem ersten Endgerät und dem Zugangspunkt, und einen Kanal zwischen dem ersten Endgerät und dem anderen Zugangspunkt des Paares umfassen,
wobei die ersten Kanäle vom ersten Endgerät geschätzt werden, und
- einer zweiten Angabe über zweite Übertragungskanäle, die von einem zweiten Endgerät gesendet wird, wobei die zweiten Übertragungskanäle einen Kanal zwischen dem zweiten Endgerät und dem Zugangspunkt, und einen Kanal zwischen dem zweiten Endgerät und dem anderen Zugangspunkt des Paares umfassen,
wobei die zweiten Kanäle vom zweiten Endgerät geschätzt werden,
wobei die Zugangspunkte des Paares homologe Verarbeitungsmittel umfassen, um die Bedienung der Endgeräte gemäß einem vorbestimmten Kriterium, das den Zugangspunkten gemein ist, in einer von den Verarbeitungsmitteln bestimmten Ordnung unter Verwendung von Übertragungsparametern auf Basis der ersten und zweiten Angabe anzuordnen.

13. Endgerät, das dafür geeignet ist, in einem Telekommunikationssystem verwendet zu werden, wobei das Endgerät
von einem ersten und einem zweiten Zugangspunkt bedient werden kann,
Mittel zum Schätzen von Übertragungskanälen zwischen dem Endgerät und dem ersten und zweiten Zugangspunkt umfasst,
dafür eingerichtet ist, die Übertragungskanäle zwischen dem ersten Endgerät und dem ersten und zweiten Zugangspunkt zu schätzen,
Mittel umfasst, um Signale zu empfangen, die vom ersten und zweiten Zugangspunkt gemeinschaftlich ausgegeben werden,
**dadurch gekennzeichnet, dass** das Endgerät umfasst:
Mittel, um dem ersten und zweiten Zugangspunkt eine Angabe über die vom Endgerät geschätzten Übertragungskanäle zu kommunizieren.

## Claims

1. A wireless telecommunication method of wherein an access point is able to transmit a signal to at least one terminal via a transmission channel, the telecommunication method being implemented in a system including at least:
- a first and a second access point,
- a first and a second terminal which can be served by said first and second access points,
the first terminal being arranged to assess first transmission channels between said first terminal and said first and second access points and the second terminal being arranged to assess second transmission channels between said second terminal and said first and second access points,
the method including a first terminal assessing said first transmission channels and the second terminal assessing said second transmission channels,
the method being **characterised in that** it includes:
a. communicating to the first and second access points a first indication about the first transmission channels through said first terminal and a second indication about the second transmission channels through said second terminal;
b. the first and second access points jointly serving said terminals, in an order determined by the first and second access points, by using transmission parameters based on said first and second indications, the first and second access points including homologous processing means to order the service of terminals according to a predetermined criterion common to the first and second access points.

2. The method according to claim 1, **characterised in that** the first and second access points jointly serve at least two terminals simultaneously.

3. The method according to claim 1, **characterised in that**:
- the first and second access points respectively draw up a first and a second list of terminals covered by the first and second access points,
- said first and second lists being ranked according to a common order and,
- the first and second access points order the successive service of the terminals according to their rank in the list, per group of at least one terminal.

4. The method according to claim 3, wherein a single identifier number is assigned to terminals, **characterised in that** said first and second lists are ranked according to an order as a function of the identifier numbers of the terminals.

5. The method according to claim 1, **characterised in that** said first and second indications include at least one piece of information about the coefficients of the transmission channels.

6. The method according to claim 5, **characterised in that** a same matrix is calculated by the first and second access points as a function of the coefficients of the transmission channels, **in that** the matrix consists of a plurality of rows of weighting coefficients, **in that** at least one row of said matrix is associated with each of said first and second access points and **in that** for each access point, the service of the first and second terminals is ordered as a function of the weighting coefficients of the matrix row associated with said access point.

7. The method according to claim 1, **characterised in that** said first and second indications include at least one piece of information about signal to interference and noise ratios of the transmission channels.

8. The method according to claim 7, **characterised in that** said common criterion to order the service of terminals is to serve at least one terminal a transmission channel of which has a maximum signal to interference and noise ratio.

9. The method according to claim 1, wherein:
- a cooperation group including at least said access points jointly serving said terminals is defined,
- said system further includes one or more access points not belonging to said cooperation group; **characterised in that**:
the first and second indications include at least one piece of information relating to a signal to interference and noise ratio respectively associated with the first and second terminals,
the signal power, in a signal to interference and noise ratio associated with a terminal, being defined as the sum of powers received by said terminal from the access points belonging to the cooperation group, and
the interference power, in a signal to interference and noise ratio associated with a terminal, being defined as the sum of powers received by said terminal from access points not belonging to said cooperation group.

10. The method according to claim 1, **characterised in that** said first and second indications each include at least one piece of information about a first beam which can be made active by the first access point and about a second beam which can be made active by the second access point, said first and second beams being likely to be received by the terminal with a maximum power.

11. A telecommunications system including at least:
- a first and a second access point,
- a first and a second terminal which can be served by said first and second access points,
the first terminal being arranged to assess first transmission channels between said first terminal and said first and second access points and
the second terminal being arranged to assess second transmission channels between said second terminal and said first and second access points,
the first terminal assessing first transmission channels and the second terminal assessing second transmission channels,
**characterised in that**:
a. the first terminal communicates to the first and second access points a first indication about the first transmission channels and the second terminal communicates to the first and second access points a second indication about the second transmission channels,
b. the first and second access points jointly serve the first and second terminals, in an order determined by said processing means, by using transmission parameters based on said first and second indications, the first and second access points include homologous processing means to sequence the service of the terminals according to a predetermined criterion common to the first and second access points.

12. A pair of access points adapted to be used in a telecommunications system,
each access point of the pair comprising means for receiving
- a first indication about first transmission channels sent by a first terminal, said first transmission channels comprising a channel between the first terminal and said access point and a channel between the first terminal and the other access point of the pair, said first channels being assessed by the first terminal and
- a second indication about second transmission channels sent by a second terminal, said second transmission channels comprising a channel between the second terminal and said access point and a channel between the second terminal and the other access point of the pair, said second channels being assessed by the second terminal
said access points of the pair including homologous processing means to sequence the service of said terminals according to a predetermined criterion common to said access points in an order determined by said processing means, by using transmission parameters based on said first and second indications.

13. A terminal adapted to be used in a telecommunications system, said terminal
being able to be served by a first and a second access points,
comprising means for assessing transmission channels between said terminal and said first and second access points
being arranged to assess the transmission channels between said first terminal and said first and second access points,
comprising means for receiving signals jointly emitted by the first and second access points
**characterised in that** the terminal comprises:
means for communicating an indication about said transmission channels assessed by said terminal to the first and second access points.
